# EUROPEAN PATENT SPECIFICATION

(11) **EP 1 628 774 B1**
(45) Date of publication and mention of the grant of the patent: **04.04.2012**
(21) Application number: 04741733.2
(22) Date of filing: 04.06.2004
(51) Int. Cl.: B01D 45/12, B04C 5/13, B04C 5/26, C10G 11/18

(54) **SEPARATION APPARATUS**
TRENNGERÄT
APPAREIL DE SEPARATION

(30) Priority: 04.06.2003 EP 03076732
(43) Date of publication of application: 01.03.2006
(73) Proprietor: Shell Internationale Research Maatschappij B.V., 2596 HR Den Haag (NL)
(72) Inventor: DIRKSE, Hendricus Arien, NL-1031 CM Amsterdam (NL); DRIES, Hubertus Wilhelmus Albertus, NL-1031 CM Amsterdam (NL)
(86) International application number: PCT/EP2004/051030
(87) International publication number: WO 2004/108297

(56) References cited:
- EP-A- 0 162 978
- EP-A- 0 604 026
- WO-A-00/65269
- US-A- 2 394 680
- US-A- 4 066 533
- US-A- 4 737 346

## Description

### Field of the invention

The invention is directed to an improved separation apparatus, wherein particles can be efficiently separated from a gas-particles mixture.

### Background of the invention

The field of fluid catalytic cracking (FCC) has undergone significant development improvements due primarily to advances in catalyst technology and product distribution obtained therefrom. With the advent of high activity catalysts and particularly crystalline zeolite cracking catalysts, new areas of operating technology have been encountered requiring even further refinements in processing techniques to take advantage of the high catalyst activity, selectivity and operating sensitivity. Of particular concern in this field has been the development of methods and systems for separating the hydrocarbon product from the catalyst particles, particularly from a high activity crystalline zeolite cracking catalysts, under more efficient separating conditions so as to reduce the overcracking of conversion products and promote the recovery of desired products of an FCC operation. Patent publications EP-A-162978, WO 00/65269 EP-A-629679, US-A-5248411 and EP-A-604026 all describe developments concerned with the rapid separation and recovery of entrained catalyst particles from the hydrocarbon products. The rapid separation is achieved in that the catalyst is separated from the reactor riser effluent in a first cyclone separator, the primary cyclone, of which gas outlet conduit is in fluid connection with a secondary cyclone. This cyclone line up in FCC reactors is also referred to as close-coupled cyclone separation provided that the primary and secondary cyclones are contained in one larger vessel. This coupling of primary and secondary cyclones minimises the residence time in which the hydrocarbon product is in contact with the catalyst after it leaves the reactor riser, which limits undesirable aftercracking.

In the connecting conduit between primary and secondary cyclone an opening or slit may be present through which gas may enter from the exterior of the cyclone configuration. Such a slit as disclosed in the above referred to patent publications is used to allow stripping gas to be discharged from the FCC reactor together with the hydrocarbon products. It is also disclosed in US-A 4,737,346 disclosing a fluid catalytic cracking reactor comprising a first riser cyclone and a second cyclone in series. Means are provided to admit gas from the reactor vessel into the second cyclone. The conduit connecting both cyclones includes an outlet duct of the first cyclone and, spaced therefrom, an inlet duct of the second cyclone. The spacing forms a port which allows gas to enter the conduit and the second cyclone.

Various designs have been proposed for the slit in the connecting conduit. A commonly used design is described in EP-A-162978. In this design the gas inlet opening of the inlet conduit connected to the gas inlet of the secondary cyclone has a larger diameter than the gas outlet opening of the outlet conduit connected to the gas outlet of the primary cyclone. In said design the inlet conduit overlaps the outlet conduit. The annular space between the two conduits forms the slit opening. The two conduit parts can move relative to each other. This allows the primary cyclone, which is usually fixed to the reactor riser, and the secondary cyclones, which are normally fixed to the roof of the FCC reactor vessel, to move relative to each other during start-up and shut down operations. Such relative movement will occur due to the different thermal expansion of the cited different parts in said FCC reactor vessel. In another embodiment, in order to align the ducts that form the annular port an aligning mechanism may be provided in the annular port. The aligning mechanism may comprise a packing which partially fills the annular port or mechanical spacers that interconnect the two ducts and partially fill the annular port.

WO-A 00/65269 describes a configuration of two cyclones in which the gas outlet of the first cyclone is connected to the gas inlet of the second cyclone via a telescopic joint. The telescopic joint comprises a first and second pipe defining between them an annular space enclosing a sliding ring held in place in the telescopic joint.

EP-A-162978 and WO-A-0065269 both describe a design for such a slit wherein the gas outlet conduit of the primary cyclone has a smaller diameter than the gas inlet opening of the conduit connected to the secondary cyclone. The two conduits overlap and spacers are provided in the overlapping section between the exterior of the outlet conduit of the primary cyclone and the inlet part of the conduit connected to the secondary cyclone.

A disadvantage of such a slit opening is that coke may grow in the annular space thereby causing the two parts of the conduit to become fixed relative to each other. During start-up and shut down operations unacceptable mechanical stress may then be exercised upon the cyclone configuration which may eventually cause serious damage. A further disadvantage is that gas having a swirling motion when it leaves the primary cyclone, will not be directed to the inlet opening of the inlet conduit if a non-overlapping slit is applied. The object of the present invention is to provide a more robust slit design for the closed-coupled cyclone configuration.

### Summary of the invention

Configuration of two cyclones for separation of solids from a solids-gas mixture wherein the gas outlet of a first cyclone is fluidly connected to an outlet conduit provided with a gas outlet opening. The gas inlet of the second cyclone is connected to an inlet conduit provided with a gas inlet opening. The outlet and inlet conduit are arranged co-axial such that gas leaving the outlet opening of the outlet conduit enters the inlet opening of the inlet conduit. Gas from the exterior of the cyclone configuration can enter the gas inlet opening of the inlet conduit. The outlet conduit and the inlet conduit are kept in a co-axial position relative to each other by means of guiding means which further act as vortex breakers. The guiding means are attached to outlet conduit or to inlet conduit and extend to the opposite conduit thereby allowing movement of the inlet and outlet conduits relative to each other in the axial direction only. The guiding means are attached to either the outlet conduit or the inlet conduit and extend into the opening of the inlet conduit.

Applicants found that by making use of guiding means a more defined slit opening resulted which was less prone to coke formation, which coke could fix the two conduit parts. Furthermore the guiding means acting as vortex breakers allow the two conduits to be spaced apart from each other in the axial direction. The gas in the outlet conduit has a swirling movement when it leaves the primary cyclone. In the absence of a vortex breaker the gas would radially move away from the centre of the conduit and if a non-overlapping slit would be applied gas would not be directed to the inlet opening of the inlet conduit.

The invention can be used in an FCC reactor comprising the cyclone configuration described above, the downstream end of a FCC reactor riser fluidly connected to the inlet opening of the primary cyclone, and a gas outlet fluidly connected to the gas outlet of the secondary cyclone and a solids outlet at the lower end of the vessel.

The invention can also be used in a catalytic cracking process making use of said FCC reactor.

The invention shall be described in more detail below, including some preferred embodiments.

### Brief Description of the drawings

Figure 1 illustrates a cross-sectional presentation of a close-coupled cyclone apparatus in an FCC reactor.
Figure 2 illustrates the top of the primary cyclone and the upstream end of connecting conduit (7) in an overlapping configuration.
Figures 3 illustrates a top view AA' of the primary cyclone of Figure 2.
Figure 4 illustrates the top of the primary cyclone and the upstream end of connecting conduit (7) in an non-overlapping configuration.
Figure 5 illustrates a top view BB' of the primary cyclone of Figure 4.

### Detailed description of the drawings

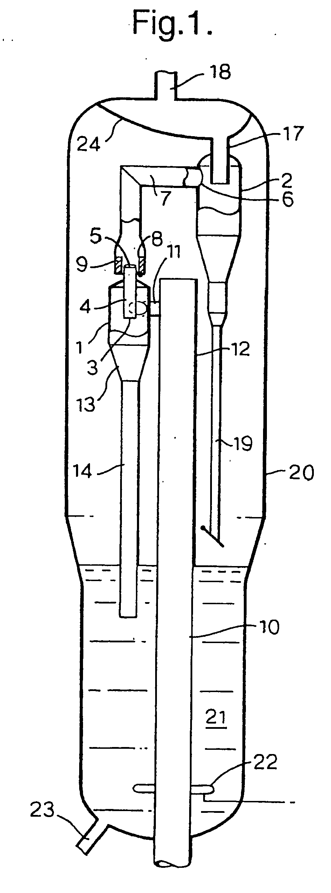

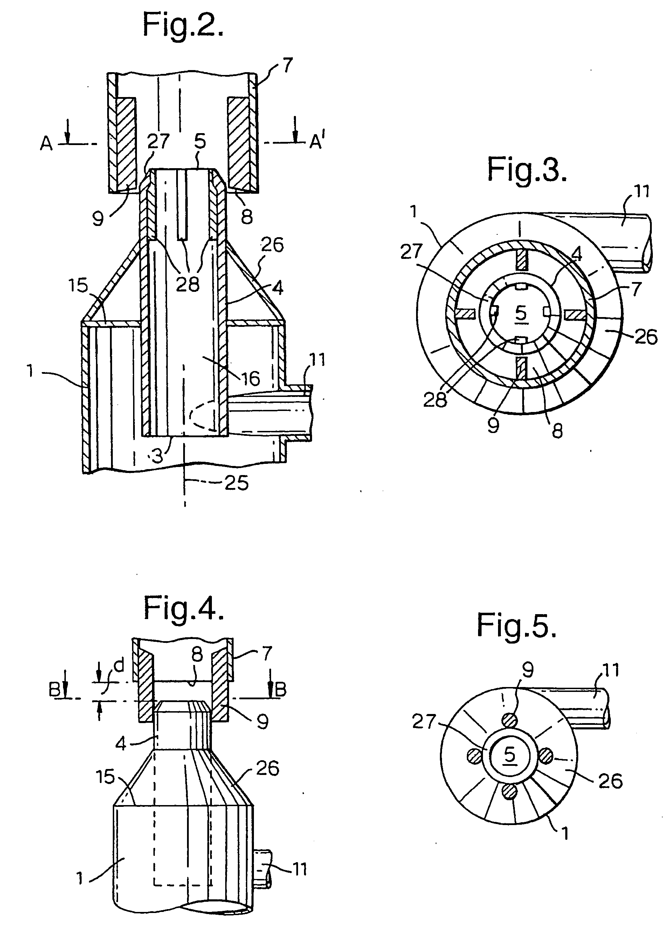

Figure 1 represent a preferred embodiment of the apparatus according to the invention. In the Figure a reactor riser (10) of a fluidized catalytic cracking process is shown which is fluidly connected via conduit (11) to a primary cyclone (1). In the Figure only one primary cyclone separator is shown for clarity reasons. Typically more than one, suitably two or three, primary cyclone separators (1) will be in fluid communication with the down stream end (12) of a reactor riser (10). The primary cyclone (1) has a tubular housing provided with a tangentially arranged inlet for receiving the suspension of catalyst particles and hydrocarbon vapour, which leave the reactor riser (10). The lower end of the tubular housing is fluidly connected by means of a frusto conical wall section (13) to a dipleg (14). Through dipleg (14) most of the catalyst particles will be discharged downwards. The upper end of the tubular housing is provided with a cover (15), see Figure 2. Cover (15) is provided with an axial circular opening (16) which opening through which opening a gas outlet conduit (4) protrudes, see Figure 2.

In the Figure 1 only one secondary separator (2) is shown for clarity reasons. More than one, for example two, secondary separators (2) may be in fluid communication with one primary cyclone (1). Through a gas outlet conduit (17) of the secondary cyclone (2) the hydrocarbon vapours, which are poor in catalyst particles, are discharged from the FCC reactor vessel via plenum (24) and gas outlet (18). The vapours are further processed in downstream product separation equipment (not shown). The secondary cyclone (2) is further provided with a dipleg (19) to discharge separated catalyst particles downwards.

The reactor vessel (20) further comprises at its lower end a stripping zone (21) provided with means (22) to supply a stripping medium to a dense fluidized bed of separated catalyst particles, which forms stripping zone (21). Stripping medium can be any inert gas, steam or steam containing gasses are suitably used as stripping medium.

The reactor vessel (20) further comprises means to discharge stripped catalyst particles from the vessel via conduit (23). Via conduit (23) stripped, or also referred to as spent catalyst, is transported to a regeneration zone (not shown). In such a regeneration zone coke is removed from the catalyst by means of (partial) combustion. Regenerated catalyst is transported to the upstream part of the reactor riser where it is contacted with a hydrocarbon feed to yield the earlier referred to suspension of catalyst particles and hydrocarbon product vapours at the down stream part of the reactor riser.

The primary cyclone (1) and the secondary cyclone (2) are fluidly connected by means of outlet conduit (4) and inlet conduit (7). Outlet conduit (4) is fluidly connected to a gas outlet opening (3) of the primary cyclone (1). Outlet conduit (4) is at its opposite end provided with a gas outlet opening (5).

The inlet conduit (7) is fluidly connected to the gas inlet (6) of the second cyclone (2). The two conduits (4, 7) are arranged co-axial such that gas leaving the outlet opening (5) of the outlet conduit (4) enters the inlet opening (8) of the inlet conduit (7). Also stripping gas from the stripping zone (21) can enter the gas inlet opening (8) of the inlet conduit (7). The gas outlet opening (5) and the gas inlet opening (8) may be arranged such that the conduits (4) and (7) overlap or they may be flush or axially spaced away from each other. The first embodiment will be referred to as overlapping design. The second embodiment will be referred to as non-overlapping design.

As shown in Figure 1 the primary cyclone (1) is fixed to the riser (10) and the secondary cyclone (2) is fixed to the upper end of vessel (20). This will result in that during start-up and cool down situations the relative distance between openings (5) and (8) may vary during to the different thermal expansion of the different parts of vessel (20). Reference to overlapping and non-overlapping designs refers to the situation at normal operating conditions.

Figure 2 shows the upper end of the primary cyclone (1) and the lower end of the inlet conduit (7). The reference numbers have the same meaning as in Figure 1. The interior of the gas outlet tube (4) is preferably provided with means (28) to decrease the swirling motion of the gas passing said outlet conduit (4). These means (28) may be baffles fixed to the inner surface of conduit (4). Preferably these baffles extend radially from the surface towards the canter of the conduit. These means (28) may be positioned along the wall parallel to the axis (25) (as shown). Alternatively the means (28) may be positioned under an angle relative to the axis (25) such that they are directed in the direction of the swirl but at a lesser angle than the swirl itself such that a decrease in the swirling would still be achieved.

Inlet conduit (7) is provided with guiding means (9). These guiding means are fixed to the interior of conduit (7) and are not fixed to conduit (4), thereby allowing free movement in the axial direction. Guiding means, which are fixed to conduit (4) and extend towards conduit (7) are also possible. For example guiding means (9) which are attached to the exterior of conduit (4). Another example is where guiding means extend from the interior of conduit (4) and extend to the inner surface of conduit (7). The latter is advantageous because such guiding means will then also function to decrease the swirling motion of gas passing said conduit (4). In effect such a guiding means will be the combination of (28) and (9) of Figure 2, wherein the guiding means are preferably fixed to conduit (4). In a preferred embodiment guiding means (9) extend further into the conduit (7) than conduit (4) the guiding means (9) will thus also achieve a deswirling effect in conduit (7)

Opening (5) is preferably provided with a tapered opening (27) such to further direct the gas into opening (8). The diameter of opening (8) is preferably larger than the diameter of opening (5).

The configuration of Figure 2 further shows that the cover (15) of the primary cyclone is provided with a frusto conical element (26), which will further direct the stripping gas from stripping zone (21) towards opening (8).

In Figure 2 a steam ring (not shown) is located between the primary cyclone (1) and opening (8), which is used to add steam locally to avoid coke deposition.

In Figure 1 and 2 the openings (5) and (8) are located in the vertical part of the conduit connecting the primary and secondary cyclone, which is the preferred location for this opening.

Figure 3 shows the top view of primary cyclone 1 illustrating the tangentially inlet connected to conduit (11), the guiding means (9) and the swirl decreasing baffles (28) inside conduit (4) which are viewed via opening (5). Also shown is the lower end of conduit (7) and the upper end of conduit (4).

Figure 4 shows the non-overlapping design. The distance (d) between opening (5) and opening (8) is zero or a positive value such to achieve a non-overlapping opening. The distance (d) is preferably between 0 and 3 times the diameter of opening (5). The guiding means (9) are cylindrical parts fixed to the interior of conduit (7). Figure 5 shows a cross-sectional top view BB' as indicated in Figure 4.

Examples of FCC processes in which the apparatus according the invention can be suitably used are described in the afore mentioned patent publications and those described in Catalytic Cracking of Heavy Petroleum Fractions, Daniel DeCroocq, Institut Français du Petrole, 1984 (ISBN 2-7108-455-7), pages 100-114. Preferably the apparatus is used in an FCC process wherein a gas solids suspension if fed to the primary cyclone having a solids content of between 1 and 12 kg/m³.

## Claims

1. Configuration of two cyclones (1,2) for separation of solids from a solids-gas mixture wherein the gas outlet (3) of a first cyclone (1) is fluidly connected to an outlet conduit (4) provided with a gas outlet opening (5) and the gas inlet (6) of the second cyclone (2) is connected to an inlet conduit (7) provided with a gas inlet opening (8), wherein the outlet (4) and inlet (7) conduit are arranged co-axially such that gas leaving the outlet opening (5) of the outlet conduit (4) enters the inlet opening (8) of the inlet conduit (7) and gas from the exterior of the cyclone configuration can enter the gas inlet opening (8) of the inlet conduit (7), wherein the outlet conduit (4) and the inlet conduit (7) are kept in a co-axial position relative to each other by means of guiding means (9) which are attached to outlet conduit (4) or to inlet conduit (7) and extend to the opposite conduit thereby allowing movement of the inlet and outlet conduits (4,7) relative to each other in the axial direction only, and wherein the guiding means (9) act as vortex breakers and are attached to either the outlet conduit (4) or the inlet conduit (7).

2. Cyclone configuration according to claim 1, wherein the diameter of the inlet opening (8) is larger than the diameter of the outlet opening (5) and wherein the guiding means (9) are attached to either the interior of the inlet opening (8) or to the exterior of the outlet opening (5)

3. Cyclone configuration according to any one of claims 1-2, wherein the outlet conduit (4) and the inlet conduit (7) are arranged along a vertical co-axial axis.

## Patentansprüche

1. Konfiguration von zwei Zyklonen (1, 2) zum Trennen von Feststoffen aus einem Feststoff-Gas-Gemisch, wobei der Gasauslaß (3) eines ersten Zyklons (1) in Fluidverbindung mit einer Auslaßleitung (4) steht, die mit einer Gasaus-laßöffnung (5) versehen ist, und der Gaseinlaß (6) des zweiten Zyklons (2) mit einer Einlaßleitung (7) verbunden ist, die mit einer Gaseinlaßöffnung (8) ausgestattet ist, wobei die Auslaßleitung (4) und die Einlaßleitung (7) koaxial angeordnet sind, derart, daß das Gas, welches die Auslaßöffnung (5) der Auslaßleitung (4) verläßt, in die Einlaßöffnung (8) der Einlaßleitung (7) eintritt und Gas von dem Äußeren der Zyklonkonfiguration in die Gaseinlaßöffnung (8) der Einlaßleitung (7) eintreten kann, wobei die Auslaßleitung (4) und die Einlaßleitung (7) in einer koaxialen Position relativ zueinander durch Führungsmittel (9) gehalten werden, die an der Auslaßleitung (4) oder an der Einlaßleitung (7) befestigt sind und sich zur gegen-überliegenden Leitung erstrecken, wodurch eine Bewegung der Einlaß- und Auslaßleitungen (4, 7) relativ zueinander nur in axialer Richtung ermöglicht wird, und wobei die Führungsmittel (9) als Wirbelbrecher wirken und entweder an der Auslaßleitung (4) oder an der Einlaßleitung (7) befestigt sind.

2. Zyklonkonfiguration nach Anspruch 1, bei welcher der Durchmesser der Einlaßöffnung (8) größer als der Durchmesser der Auslaßleitung (5) ist, und wobei die Führungsmittel (9) entweder im Inneren der Einlaßöffnung (8) oder am Äußeren der Auslaßöffnung (5) befestigt sind.

3. Zyklonkonfiguration nach einem der Ansprüche 1-2, bei welcher die Auslaßleitung (4) und die Einlaßleitung (7) entlang einer vertikalen koaxialen Achse angeordnet sind.

## Revendications

1. Configuration de deux cyclones (1,2) pour la séparation de solides d'un mélange solides-gaz, dans laquelle la sortie de gaz (3) d'un premier cyclone (1) est en communication de fluide avec une conduite de sortie (4) équipée d'une ouverture de sortie de gaz (5) et l'entrée de gaz (6) du second cyclone (2) est raccordée à une conduite d'entrée (7) équipée d'une ouverture d'entrée de gaz (8), dans laquelle la conduite de sortie (4) et la conduite d'entrée (7) sont disposées coaxialement de sorte que le gaz quittant l'ouverture de sortie (5) de la conduite de sortie (4) entre dans l'ouverture d'entrée (8) de la conduite d'entrée (7) et que le gaz de l'extérieur de la configuration de cyclones puisse entrer dans l'ouverture d'entrée de gaz (8) de la conduite d'entrée (7), dans laquelle la conduite de sortie (4) et la conduite d'entrée (7) sont maintenues en position coaxiale l'une par rapport à l'autre à l'aide de moyens de guidage (9) qui sont fixés à la conduite de sortie (4) ou à la conduite d'entrée (7) et s'étendent vers la conduite opposée, permettant ainsi le mouvement des conduites d'entrée et de sortie (4,7) l'une par rapport à l'autre dans la direction axiale uniquement, et dans laquelle les moyens de guidage (9) agissent comme des déflecteurs anti-tourbillons et sont fixés à la conduite de sortie (4) ou à la conduite d'entrée (7).

2. Configuration de cyclones selon la revendication 1, dans laquelle le diamètre de l'ouverture d'entrée (8) est plus grand que le diamètre de l'ouverture de sortie (5) et dans laquelle les moyens de guidage (9) sont fixés à l'intérieur de l'ouverture d'entrée (8) ou à l'extérieur de l'ouverture de sortie (5).

3. Configuration de cyclones selon l'une quelconque des revendications 1-2, dans laquelle la conduite de sortie (4) et la conduite d'entrée (7) sont aménagées le long d'un axe vertical coaxial.
